# EUROPEAN PATENT APPLICATION

(11) **EP 1 249 796 A2**
(43) Date of publication of application: **16.10.2002**
(21) Application number: 01310322.1
(22) Date of filing: 11.12.2001
(51) Int. Cl.: G07C 5/00, G07C 5/08

(54) **Hardened voyage data recorder**

(30) Priority: 06.07.2001 US 899646; 10.04.2001 US 282821 P
(71) Applicant: L-3 Communications Corporation, New York, N.Y. 10016 (US)
(72) Inventor: Purdom, Gregory W, Sarasota, FL 34232 (US)
(74) Representative: Robson, Aidan John

(57) **Abstract**

A hardened voyage data recorder includes two subsystems: a removable non-volatile memory module and a base containing electronics and firmware for communicating with data sensing systems and for accessing the memory. According to the invention, the memory is a stacked BGA memory protected in a "boiler" which is designed to tolerate a low temperature fire environment for a relatively long term. The boiler and the memory module subsystem are designed to withstand penetration forces associated with marine accidents. Cabling from the memory is arranged so that the structural integrity of the boiler is not compromised.

## Description

### BACKGROUND OF THE INVENTION

### 1. Field of the Invention

The invention relates to methods and apparatus for recording data concerning the operation of a sea borne vessel. More particularly, the invention relates to methods and apparatus for recording and protecting data leading up to an accident or "incident". Further, the invention relates generally to methods and apparatus for protecting heat sensitive items, such as solid state memory devices used in a marine data recorders and the like, from heat that may be produced from fire following a marine accident. The invention also relates generally to methods and apparatus for protecting such items from shock damage and the affects of moisture.

### 2. Brief Description of the Prior Art

It has long been noted that the investigation of maritime accidents and incidents could benefit from the recording of data and audible commands occurring aboard ships. Indeed, many considered this an inevitable technological extension of the time-honored ship's logbook. This desire has culminated in the development of an international standard governing the performance of a Voyage Data Recorder (VDR).

In 1974 the Safety of Life at Sea (SOLAS) Convention of the International Maritime Organization (IMO) acknowledged the value and expressed the desire of having recorders on ships similar to the "black box'' flight recorders for aircraft. This began a long process of establishing international standards and requirements for a Voyage Data Recorder (VDR).

In 1996, VDR requirements, which had been debated for a long time, began to emerge in the navigation and electronics subgroup (NAV) of the IMO. Anticipating an eventual IMO resolution concerning VDRs, IEC (International Electrotechnical Commission) TC80 formed WG11, which began structuring a specification based on preliminary drafts of the NAV requirements. The IMO passed resolution A.861 (20) in November 1997 and the IEC standard 61996 was completed as a Committee Draft for Voting in March 1999. The specification was published in August 2000.

The IEC 61996 Ship Borne Voyage Data Recorder Performance Requirements describes data acquisition and storage functions and refers to a ''protective capsules" and a "final storage mediums". Architecture for complying with this standard has emerged with two major components.

In the first component, the ship's interfaces, data acquisition, and soft recording functions are encompassed in a Data Management Unit (DMU). The DMU is intended for installation in the relatively benign environment of the bridge. The second component is the Hardened Voyage Recorder (HVR) which encompasses the protective capsule and final storage medium. The HVR is designed for survivability and recoverability. It is intended for external installation on the bridge deck or on top of the superstructure.

The primary function of the Hardened Voyage Recorder (HVR) is to protect the data acquired by the Voyage Data Recorder (VDR) so that the data can be used during accident or "incident" investigation.

Previously incorporated co-owned co-pending serial number --/---,--- discloses details related to the electronics and software of the HVR. The present application relates to the physical details of the "protective capsule" containing memory. The protective capsule must protect the memory from impact damage, thermal damage and moisture damage.

It is known in the art of aircraft flight recorders to use a "boiler" to protect memory from thermal damage. A "boiler" is defined herein as a multiple (two or more) compartment containment structure which may be used to separate a thermal mass (such as water) from devices (such as solid state memory devices) being protected.

U.S. Patent Number 5,750,925, entitled "Flight Crash Survivable Storage Unit With Boiler For Flight Recorder Memory", issued May 12, 1998, originally assigned to Loral Fairchild, Corp. (Purdom et al.), the complete disclosure of which is incorporated herein by reference, describes one such "boiler". More particularly, the '925 patent describes a unit designed to withstand temperatures of 1100 degrees C (approximately 2000 degrees F), which is defined herein to be a "high temperature" environment for a relatively short term.

Although the unit described in the '925 patent is suitable for protecting heat sensitive components (like solid state memory) in a high temperature environment, such as the environment that often accompanies aircraft fires; problems germane to the survivability of heat sensitive components following a marine crash are very different from those arising following an air disaster and are not addressed by Purdom et al., or indeed any known marine recorders.

In particular, marine recorders need to be able to survive in "low temperature" fires, i.e., a fire defined herein to be burning (or smoldering) at 260 degrees C for a relatively long term, e.g. 10 hours, as opposed to aircraft recorder high temperature industry survivability specifications of being able to withstand an 1100 degree C environment for 1 hour.

Low temperature fires were not a problem with prior art protective units, such as the one described in the incorporated '925 patent, because those units used "TSOP" (thin small outline package) memory components, with leads extending therefrom. As a result, even if a board could not (or did not) survive a low temperature fire, the memory chips that did survive and could be "reworked", i.e., be placed on another board easily and read.

In the present application (marine recorder application) low temperature fire survivability at the board level becomes very important since it is desirable to use "BGA" (ball grid array) packages for memory components. These smaller packages can be more densely packed, use less "real estate", etc.; but suffer from the constraint that connections are made under the device. I.e., no leads extend out from the periphery of a BGA package (like they do from a TSOP) which could make board reworking after a low temperature fire difficult or impossible. Nevertheless, the BGA design is otherwise desirable for the reasons indicated hereinabove and for other reasons described below.

For example, it is further desirable to use BGA packaging since the spacing between connections is larger than with TSOP. This fact enhances unit reliability since it is easier to prevent solder bridges. In addition to a more reliable unit, a unit utilizing BGA memory is easier to fabricate.

Thus, even though no leads extend therefrom and it is more difficult (or impossible) to rework a memory storage unit if a board is destroyed in low temperature fire, it is nevertheless desirable to provide and protect (in the marine context) BGA memory, i.e., provide a boiler protected BGA solid state memory that can survive a low temperature fire at board level over relatively long term.

Further, using the '925 patent as a frame of reference, the boiler described in that patent does not provide the mechanical strength required for marine applications. More particularly, marine applications standards addressing "penetration" are different from those for flight recorders since the size of objects involved in a marine accident are typically considerably larger than the relative light weight pieces of an aircraft involved in an air crash.

As a result, energy is not absorbed by the penetrator (penetrating object) breaking up. Since the objects, such as ship components or ships themselves, are relatively larger and heavier (compared with aircraft parts), and all of a penetrator's energy could be directed towards the boiler, structural considerations for using a boiler in the marine context is a serious new problem that did not exist in the flight recorder context. The shape, structure and materials used for a marine boiler becomes an issue if the boiler is to survive and perform its protective function.

Further problems exhibited by prior art boilers, including the one described in the '925 patent, limit their suitability for use in marine applications. In particular, the cabling exiting design used in connection with such boilers is not acceptable for marine applications. This is because it impacts the structural integrity of the boiler itself rendering it unsuitable for the marine environment.

It may be seen with reference to the '925 patent that the cable exits the boiler via a rectangle cut out of plate edge; this is a point of weakness in the lid.

### SUMMARY OF THE INVENTION

Embodiments of the invention provide a Hardened Voyage Recorder which meets or exceeds the requirements of the IEC 61996 test specifications.

Embodiments of the invention also provide a Hardened Voyage Recorder which incorporates a memory unit protected in a boiler.

Embodiments of the invention provide a Hardened Voyage Recorder which includes a boiler which is capable of withstanding a low temperature fire for a relatively long term.

Embodiments of the invention provide a Hardened Voyage Recorder which utilizes BGA memory.

Embodiments of the invention provide a Hardened Voyage Recorder which includes a boiler with improved cable routing such that the integrity of the boiler is not compromised.

Embodiments of the invention provide a Hardened Voyage Recorder which includes a boiler having an improved cover.

Embodiments of the invention provide a Hardened Voyage Recorder which includes a stacked memory protected by a boiler.

A Hardened Voyage Recorder (HVR)embodying the invention includes two separable subassemblies. The first subassembly is a mounting base subassembly designed to be directly fastened to the ship and provide a watertight cable entry for power and data connections. The second subassembly is a removable hardened memory subassembly which is attached to the mounting base with a quick releasing clamp.

The hardened memory subassembly has a bracket for an externally mounted underwater location beacon with dual activation moisture sensors to avoid inadvertent activation due to spray, rain, or hosing off. The HVR is preferably painted a highly visible florescent orange with white reflective labels. The reflective labels contain the required text: VOYAGE DATA RECORDER, DO NOT OPEN, REPORT TO AUTHORITIES.

The mounting base subassembly includes electronics for receiving data and writing data to the memory in the hardened memory subassembly as disclosed in more detail in previously incorporated serial number --/- --,--- filed simultaneously herewith.

The removable hardened memory subassembly preferably includes 1.5 gigabytes of BGA solid state memory arranged in a stack which is protected in a boiler. According to the presently preferred embodiment, the hardened memory subassembly includes a substantially cylindrical stainless steel "bell" containing a substantial layer of insulation defining a cylindrical well for receiving the boiler.

A boiler embodying the invention includes a bifurcated cylindrical member, one portion of which is a thermal expansion cavity adapted to contain a phase change material or "thermal mass" which acts as a heat sink. The other portion of the bifurcated cylindrical member defines a storage compartment for a stacked memory.

In one embodiment, a ribbon cable extends from the last memory board in the stack and through a circular opening spaced away from the edge of a stainless steel cover. The boiler is disposed in the cylindrical well defined by the insulation in the bell. A silicone rubber pad is placed over the ribbon cable to protect it an a cylindrical insulator is placed in the cylindrical well to fill it. A stainless steel cover used to hold insulation and the boiler into the bell is locked into the bell by two snap rings.

### BRIEF DESCRIPTION OF THE DRAWINGS

FIG. 1 is a perspective view of an HVR according to the invention;
FIG. 2 is a side elevation view of an HVR according to the invention;
FIG. 3 is a side elevation view of the hardened memory subassembly with the beacon bracket removed;
FIG. 4 is a sectional view taken along line A-A in FIG. 3;
FIG. 5 is an exploded perspective view of a boiler according to the invention;
FIG. 6 is a plan view of the assembled boiler showing the ribbon cable;
FIG. 7 is a side elevational view in partial section of the assembled boiler; and
FIG. 8 is an enlarged detail of the circled portion of FIG. 7.

### DETAILED DESCRIPTION

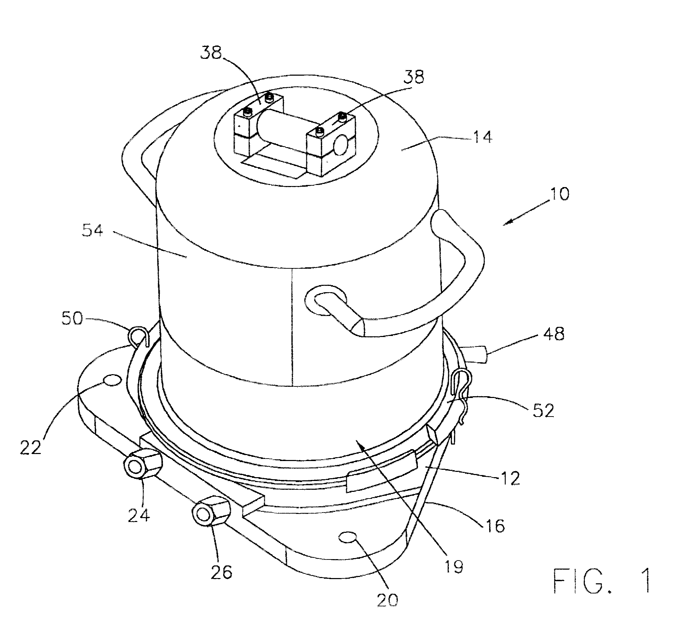

Turning now to Figures 1-3, the Hardened Voyage Recorder (HVR) 10 according to the invention includes two separable subassemblies. The first subassembly 12 is a mounting base subassembly designed to be directly fastened to the ship and provide a watertight cable entry for power and data connections. The second subassembly 14 is a removable hardened memory subassembly which is attached to the mounting base with a quick releasing clamp.

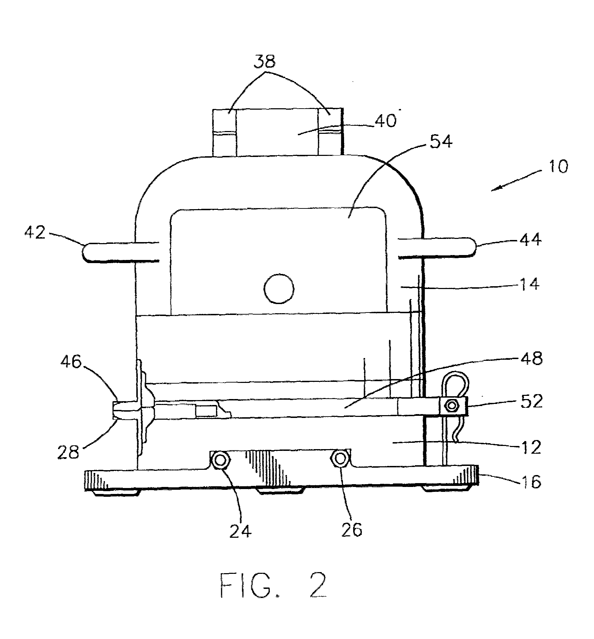

Referring now to the mechanical features of the subassembly 12, as shown in Figures 1 and 2, the mounting base subassembly 12 has a lower flange 16 defining three mounting holes 18, 20, 22. Two cable gland connectors 24, 26 are provided for a watertight coupling of power and data cables (not shown). As seen best in Figure 2, the subassembly 12 is also provided with an upper flange 28 which is used to provide a sealing engagement with the removable hardened memory subassembly 14.

The mechanical features of the hardened memory subassembly 14 include a bracket 38 for an externally mounted underwater location beacon 40. The beacon is preferably provided with dual activation moisture sensors to avoid inadvertent activation due to spray, rain, or hosing off. The subassembly 14 also has two lifting handles 42, 44 and a lower flange 46 which is used to provide a sealing engagement with the subassembly.

The HVR also includes a V-band 48 having two quick release clamps 50, 52. As mentioned above, the HVR is preferably painted a highly visible florescent orange with white reflective labels, e.g. label 54 shown in Figures 1 and 2. The reflective labels contain the required (by IEC 61996) text: VOYAGE DATA RECORDER, DO NOT OPEN, REPORT TO AUTHORITIES. A strip of reflective tape, 19, is shown in FIG. 1, further satisfying the requirements of IEC 61996.

The presently preferred embodiment of the HVR 10 is approximately thirteen inches high and has a diameter of approximately eight inches. The lower flange 16 of the subassembly 12 is substantially triangular and is approximately ten inches per side. The total weight of the HVR is approximately forty one pounds with the base 12 weighing approximately thirteen pounds and the memory subassembly 14 weighing approximately twenty eight pounds.

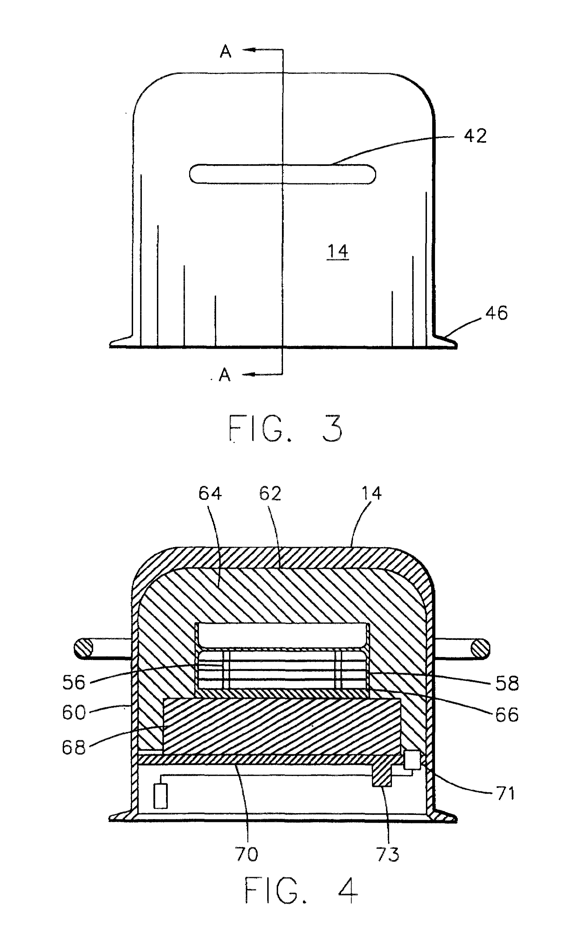

As shown in Figure 4, the subassembly 14 generally includes memory 56 which is protected in a boiler 58.

More particularly, the subassembly 14 includes a stainless steel bell 60 which is preferably cylindrical in shape and which defines a first interior cylindrical space 62. A first insulating member 64 is disposed in the cylindrical space 62 and defines a second interior cylindrical space 66.

As seen in Figure 4, the cylindrical space 66 has a stepped configuration. The boiler 58 containing the memory 56 is disposed in the cylindrical space 66. A second insulating member 68 is placed in the cylindrical space 66 covering the boiler 58 and the step of the space 66. The bell 60 is sealed with a stainless steel disk 70 which is held in place by inner and outer snap rings, not shown.

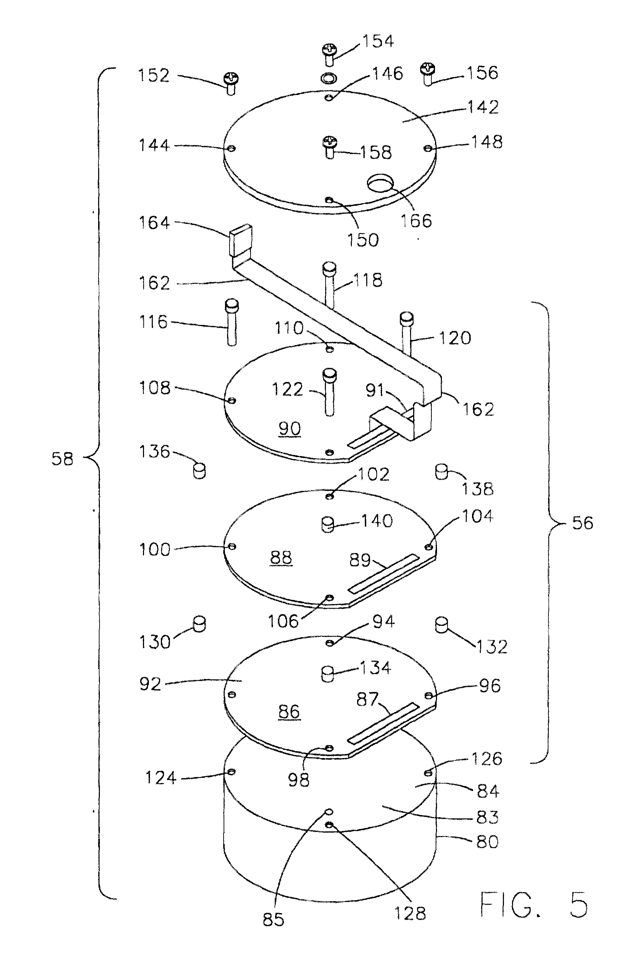

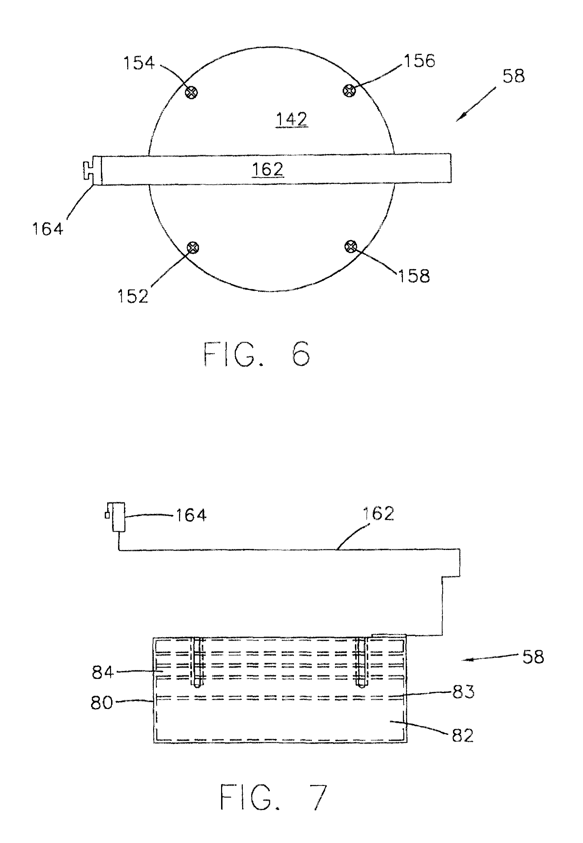

Turning now to Figures 5-8, the boiler 58 according to the invention includes a bifurcated cylindrical member 80, one portion of which is a thermal expansion cavity 82 (seen best in Figure 7) adapted to contain a phase change material or ''thermal mass'' (not shown) which acts as a heat sink. The other portion 84 of the bifurcated cylindrical member 80 defines a storage compartment for a stacked memory 56. The two portions 82 and 84 are separated by a demising wall 83. The demising wall 83 includes a fusible valve 85 which opens at a predetermined temperature to allow the thermal mass to enter the compartment 84 and protect the memory from fire.

Suitable compounds for use as a thermal mass include water and wax which are both phase change materials. However, the thermal mass need not be a phase change material. It need only be capable of acting as a heat sink. According to a one embodiment of the invention, water is contained in a dry material which inhibits the water from freezing or expanding. Such materials include (for example) sponge, silica, polyacrylamide, calcium silicate or pottery clay. It should be noted that containment compartment 82 for containing a thermal mass may include the a thermal expansion cavity to accommodate expansion of the thermal mass.

Another acceptable thermal mass is a dry powder thermal mass formed by combining water and silica, or a gel formed by combining water and polyacrylamide. The thermal mass created from such compositions inherently absorb shock which provides additional protection for the memory 56 contained in the boiler 80.

According to the presently preferred embodiment, the memory 56 includes three circuit boards 86, 88, 90, each having an electrical coupling 87, 89, 91. Each circuit board preferable provides 512 megabytes of memory assembled from four 128 megabyte BGA memory chips or from sixteen 32 megabyte BGA memory chips (not shown). The total volume of the memory 56 is therefore preferably 1.5 gigabytes. As mentioned in the previously incorporated related application, the memory boards may be advantageously provided with MIC chips to address the memory.

Each memory board is provided with four peripheral mounting holes 92, 94, 96, 98; 100, 102, 104, 106; and 108, 110, 112, 114. The three memory boards 86, 88, 90 are assembled with four screws 116, 118, 120, 122, four nylon nuts (only three of which are seen in Figure 5) 124, 126, 128 and eight spacers (only six of which are seen in Figure 5) 130, 132, 134, 136, 138, 140.

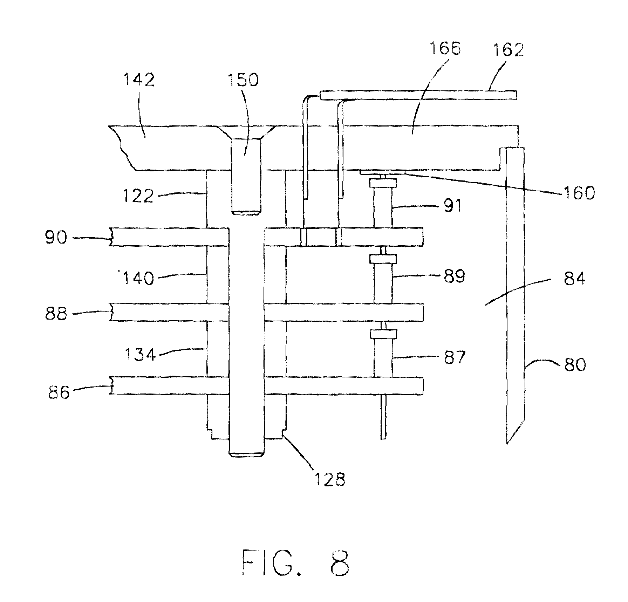

Each of the four screws 116, 118, 120, 120 has a threaded head as seen best with regard to screw 122 in Figure 8. A cover plate 142 having four peripheral mounting holes 144, 146, 148, 150 is fastened to the threaded heads of the screws 116, 118, 120, 120 by four short screws 152, 154, 156, 158. As seen in Figure 8, the board to board connectors have a female part on one side of the board and a male part on the other side of the board, thereby permitting any number to be stacked. Accordingly, the connector 91 immediately adjacent to the cover plate 142 is insulated from the cover plate by a piece of tape 160. According to a presently preferred embodiment, the cover plate 142 is press fit into the boiler 80 as seen best in Figure 8.

According to the presently preferred embodiment, a ribbon cable 162 is hard wired to the last memory board 90 as seen best in Figure 8. The ribbon cable 162 is preferably provided with a J10 connector 164 for coupling to electronics in the base assembly as described in more detail in the previously incorporated related application filed simultaneously herewith.

According to the presently preferred embodiment, the cover plate 142 is provided with a circular opening 166 which is spaced apart from the edge of the plate. The ribbon cable 162 passes through the opening 166.

As shown in the Figures, and in particular Figure 4, the cable 162 follows a path through six bends. These bends allow the cable to exit the boiler, route between the two insulators 64, 68 (Figure 4), exit the bell 60 through an opening 71 in the stainless steel disk 70, move across the bottom of the bell and go down to the electronics subassembly (12 in Figure 2. In order to relieve stress at the exit opening 71, a cable guide 73 is provided adjacent thereto.

As seen best in Figure 4, the arrangement of the ribbon cable is such that it need not traverse as much insulation as the cable in the prior art boilers such as the aforementioned 925 patent. According to the invention, the cable is further protected by a silicone rubber pad which is placed between the cable and the insulation.

The removable memory subassembly according to the invention withstands a penetration of a 100mm 250kg projectile at three meters. It will withstand a 50g's, 11 ms half sine shock and an immersion of 6,000 meters depth. The memory will withstand a 260°C fire for ten hours.

There have been described and illustrated herein a hardened voyage data recorder, a removable memory module assembly, and a boiler for protecting the memory therein. While particular embodiments of the invention have been described, it is not intended that the invention be limited thereto, as it is intended that the invention be as broad in scope as the art will allow and that the specification be read likewise. It will therefore be appreciated by those skilled in the art that certain modifications could be made to the provided invention without deviating from its spirit and scope as so claimed.

## Claims

1. A hardened voyage recorder including a removable memory module, for use on a marine vessel, wherein said removable memory module comprises:
(a) an outer housing including an inner cavity for containing a solid state memory;
(b) a cover for said outer housing; and
(c) a thermal insulator located within said inner cavity defining at least a portion of a second interior cavity, with said solid state memory being located within said second inner cavity.

2. A hardened voyage recorder as set forth in claim 1 further comprising a boiler located within said second interior cavity including a containment compartment for containing a thermal mass, a protective compartment within which said solid state memory is located and means for interconnecting said containment compartment and said protective compartment wherein said means for interconnecting, when open, provides a passageway between said containment compartment and said protective compartment.

3. A hardened voyage recorder as set forth in claim 2 wherein said solid state memory is protected from temperatures on the order of 260°C for approximately ten hours.

4. A hardened voyage recorder as set forth in claim 2 wherein said solid state memory includes at least one BGA chip.

5. A hardened voyage recorder as set forth in claim 2 wherein said outer housing has an impact strength suitable for use in marine applications.

6. A hardened voyage recorder as set forth in claim 2 wherein said boiler includes a cover plate which covers said protective compartment, said cover plate defines a through hole spaced apart from its edge, and said solid state memory is coupled to a cable which extends through said through hole.

7. A hardened voyage recorder as set forth in claims 3, 4, 5 or 6 wherein solid state memory includes BGA memory.

8. A hardened voyage recorder as set forth in claims 3, 4, 5 or 6 wherein said solid state memory is stacked memory.

9. A hardened voyage recorder as set forth in claim 3, 4, 5 or 6 wherein said boiler includes a cover plate which covers said protective compartment, said cover plate defines a through hole spaced apart from its edge, and said solid state memory is coupled to a cable which extends through said through hole.

10. A hardened voyage recorder as set forth in claim 9 wherein said through hole is substantially circular.

11. A hardened voyage recorder as set forth in claim 9 wherein said cover plate is press fit to said boiler.

12. A hardened voyage recorder as set forth in claim 3, 4, 5 or 6 wherein said thermal mass includes a phase change material (PCM).

13. A hardened voyage recorder as set forth in claim 12 wherein said PCM utilizes the energy absorption from vaporization to absorb heat.

14. A hardened voyage recorder as set forth in claim 12 wherein said PCM is water.

15. A hardened voyage recorder as set forth in claim 14 wherein said water is contained in a dry material which inhibits the water from freezing or expanding.

16. A hardened voyage recorder as set forth in claim 15 wherein said dry material comprises sponge, silica, polyacrylamide, calcium silicate or pottery clay.

17. A hardened voyage recorder as set forth in claim 12 wherein said thermal mass is a dry powder formed by combining water and silica.

18. A hardened voyage recorder as set forth in claim 3, 4, 5 or 6 wherein said thermal mass absorbs shock.

19. A hardened voyage recorder as set forth in claim 18 wherein said thermal mass is a gel formed by combining water and polyacrylamide.

20. A hardened voyage recorder as set forth in claim 3, 4, 5 or 6 further comprising a fusible valve that opens at a predetermined temperature to allow said thermal mass to flow through said passageway.

21. A hardened voyage recorder as set forth in claim 20 wherein said fusible valve comprises at least one thermal vent plug which is released at a predetermined temperature.

22. A hardened voyage recorder as set forth in claim 21 wherein said thermal vent plug comprises wax, paraffin, a bismuth alloy or electrical solder.

23. A hardened voyage recorder as set forth in claim 3, 4, 5 or 6 wherein said cover for said outer housing is coupled to said outer housing with a snap ring.

24. A hardened voyage recorder as set forth in claim 23 wherein said cover for said outer housing is coupled to said outer housing with two snap rings.

25. A hardened voyage recorder as set forth in claim 3, 4, 5 or 6 wherein said outer housing withstands a penetration of a 100mm 250kg projectile at three meters.

26. A hardened voyage recorder as set forth in claim 3, 4, 5 or 6 wherein said outer housing will withstand a 50g's, 11 ms half sine shock.

27. A hardened voyage recorder as set forth in claim 3, 4, 5 or 6 wherein said outer housing will withstand an immersion of 6,000 meters depth.

28. A hardened voyage recorder as set forth in claim 1 further comprising electronics for receiving data from data sensors located on said marine vessel, electronics for writing data to said memory module and a mountable base for mounting the hardened voyagerecorder on said marine vessel.
